# EUROPÄISCHE PATENTANMELDUNG

(11) **EP 4 687 247 A1**
(43) Veröffentlichungstag der Anmeldung: **04.02.2026**
(21) Anmeldenummer: 24191816.8
(22) Anmeldetag: 30.07.2024
(51) Int. Cl.: H02J 3/00, H02J 13/00

(54) **COMPUTERIMPLEMENTIERTES VERFAHREN ZUR PLANUNG DES SCHUTZKONZEPTS EINES ELEKTRISCHEN ENERGIEÜBERTRAGUNGSNETZES, PLANUNGSANORDNUNG UND COMPUTERPROGRAMM**

(71) Anmelder: Siemens Aktiengesellschaft, 80333 München (DE)
(72) Erfinder: Meyer, Georg Janick, 91052 Erlangen (DE); Romeis, Christian, 91052 Erlangen (DE)
(74) Vertreter: Siemens Patent Attorneys

(57) **Zusammenfassung**

Gegenstand der vorliegenden Erfindung ist ein computerimplementiertes Verfahren zur Planung eines Schutzkonzepts für ein elektrisches Energieversorgungsnetz mittels einer Planungsanordnung, gekennzeichnet durch die Schritte:
Bereitstellen eines Eingangsdatensatzes mit initialen typischen Konfigurationen von Schutzkonzepten mittels einer Schutzdatenbank, wobei die Schutzkonzepte jeweils topologische Informationen mit Knoten und Elementen aufweisen,
gekennzeichnet durch die Schritte:
Vervielfältigen der initialen typischen Konfigurationen mittels einer Veränderungseinrichtung, indem Einspeisungen elektrischer Energie und/oder Lasten an Knoten und/oder Kenndaten der Elemente verändert werden, und
Durchführen von Lastflusssimulationen und/oder Kurzschlusssimulationen für das Energieversorgungsnetz anhand der initialen und vervielfältigten typischen Konfigurationen mittels einer Simulationseinrichtung, und
Abspeichern der initialen und vervielfältigten typischen Konfigurationen mit den ihnen jeweils zugeordneten Simulationsergebnissen in der Schutzdatenbank.

Ferner sind Gegenstände der Erfindung eine entsprechende Planungsanordnung und ein entsprechendes Computerprogramm.

## Beschreibung

Die Erfindung betrifft ein Verfahren zur Planung eines elektrischen Energieübertragungsnetzes gemäß Anspruch 1, eine Planungsanordnung gemäß Anspruch 13 und ein Computerprogramm- gemäß Anspruch 15.

Energiesysteme weltweit nehmen eine Schlüsselrolle bei der Erreichung von Klimazielen, der Elektrifizierung von Sektoren und der Anbindung erneuerbarer Energieerzeuger ein. Sie stehen vor enormen Herausforderungen und unterliegen zunehmenden Veränderungen wie z.B. variabler Einspeisung und der Integration neuer Technologien. Betriebs- und Fehlerbedingungen werden dabei immer vielfältiger, probabilistischer und schwieriger vorherzusagen. Schutzsysteme haben die Aufgabe, Energiesysteme vor den Folgen und Auswirkungen von Fehlern zu bewahren. Schutzkonzepte werden jedoch bis heute manuell von Experten erstellt und nur selten nach Änderungen überprüft und angepasst. Der gesamte Prozess der Schutzkonzepterstellung gestaltet sich aufwendig, arbeitsintensiv und erfordert ein hohes Maß an Expertise und Zeit. Darüber hinaus stoßen traditionelle Einstellvorschriften und Ansätze aufgrund der zunehmenden Komplexität der Systeme an ihre Grenzen.

Aus der Produktbroschüre "PSS E, High-performance Transmission Planning and Operations Software for the Power Industry", Siemens AG 2017, Article Number: EMDG-B10125-00-7600-PSSE Brochure ist eine Planungssoftware für Energieübertragungsnetze bekannt. Ergänzend wird häufig eine aus der Produktbroschüre "PSS SINCAL - All-in-one Simulation Software for the Analysis and Planning of Power Networks", Siemens AG 2018, Article Number: EMDG-B90038-00-7600--PSSSINCAL Brochure, bekannte Software eingesetzt. Um ein Energienetz zu planen und die Planung in einem realen Netz umzusetzen, sind aber aufgrund der Komplexität der Vernetzung vieler Betriebsmittel bisher viele manuelle Schritte durch Netzplanungsexperten erforderlich. Eine typische Vorgehensweise wird in dem Flyer "Planung von Übertragungsnetzen - Ein Fundus von Wissen für Ihre Energieanlagen" der Siemens AG 2018 erörtert.

Ferner ist aus der Druckschrift EP 3764311 A1 bekannt, ein elektrisches Energieübertragungsnetz graphisch zu repräsentieren, um die Topologie, d.h. die Verschaltung der Betriebsmittel wie Leistungsschalter, Spannungswandler, Stromwandler, "Intelligent Electronic Devices" usw. abzubilden. Es werden also sowohl Primärtechnik als auch Sekundärtechnik abgebildet. Hinterlegt werden außerdem Parametrierungsinformationen und Kommunikationswege. Dieser Eingangsdatensatz kann mittels der graphischen Repräsentation analysiert werden. Betriebsmittel sind dabei als Knoten; Kommunikationswege und elektrische Verbindungen (und ggf. logische Zugehörigkeiten) sind als Kanten dargestellt. Die unterschiedlichen Betriebsmittel bzw. Knoten sind dabei durch eine erste Kennzeichnung unterscheidbar dargestellt. Die erste Kennzeichnung kann beispielsweise den Typ des Betriebsmittels angeben, also z.B. einen Leistungsschalter kennzeichnen. Auch die Kanten sind durch weitere Kennzeichnungen unterscheidbar, so dass eine Kommunikationsverbindung (z.B. ein IED - "intelligent electronic device" sendet Daten an ein weiteres IED) von z.B. einer logischen Zugehörigkeit (ein IED weist verschiedene Funktionen auf) oder einer elektrischen Verbindung (zwei Betriebsmittel sind durch eine elektrische Leitung z.B. für Mittelspannung verbunden) unterschieden werden kann. Mithilfe der aufgefundenen typischen Konfigurationen können auf einfache Weise neue Energieübertragungsnetze geplant werden, indem mit den typischen Konfigurationen bereits erprobte Konfigurationen von Betriebsmitteln wiederverwendet werden. Dies reduziert den Planungs- und ggf. Simulationsaufwand bei der Netzplanung enorm.

In der heutigen Praxis werden Schutzkonzepte von Experten auf der Grundlage langjähriger Erfahrungen erstellt. Als Ausgangspunkt verwenden diese vordefinierte Standardschutzpakete (Typicals), die als Schutzschemata bekannt sind und in den letzten Jahrzehnten entwickelt und gesammelt wurden. Es existieren mittlerweile Bibliotheken mit standardisierten Vorlagen, um geeignete Schutzsysteme für verschiedene Anwendungen zu finden und auszuwählen. Einige Typicals sind im "Power Engineering Guide", 8th Edition, Siemens AG 2017, BG184-000595-00 | 0417, Seiten 344 ("Protection of a transformer") bis 347 ("Application examples - motor protection" ff. beschrieben. In der "4th Edition", Order No. E50001-U700-A68-X-7600, sind weitere typische Konfigurationen auf den Seiten S. 256-274 für z.B. Kabel und Freileitungen enthalten. Jede dieser Vorlagen enthält eine spezielle Netzwerktopologie mit einem zu schützenden Betriebsmittel, einschließlich Randbedingungen und einem vordefinierten Schutzkonzept. Letzteres besteht wiederum aus Schutzgeräten, Leistungsschaltern, Strom- und Spannungswandlern, Haupt- und Reserveschutzfunktionen sowie weiteren möglichen Geräten und Kommunikationssystemen. Das Knowhow zur Erstellung und Nutzung der Typicals liegt vor allem in Form von Fachwissen der jeweiligen Experten vor. Verschiedene Abteilungen wie die Siemens PTI oder Übertragungs- und Verteilnetzbetreiber haben hierfür spezialisierte Schutzingenieure. Neue Konzepte basieren auf den Erfahrungen der Experten, wobei oftmals auf bereits bestehende Konzepte zurückgegriffen wird.

Erste Ansätze den Prozess der Schutzkonzepterstellung vollständig zu Automatisieren wurden im Kopernikus ENSURE Projekt vorgestellt. Dabei wurde zusammen mit anderen Partnern eine Toolchain entwickelt, die aus verschiedenen Bausteinen besteht, um Schutz-Typicals innerhalb eines Netzes zu erkennen und dann automatisiert einzustellen, zu bewerten und zu optimieren. Beispielsweise wurden diese Ansätze in dem Paper "DIGITAL SYSTEM PROTECTION DESIGN - A NEW TOOLCHAIN FOR PROTECTION" von Meyer und Romeis et al. auf der "25th International Conference on Electricity Distribution", 3-6 Juni 2019 in Madrid, vorgestellt.

Neue Möglichkeiten und Ansätze, Schutzkonzepte zu bewerten und zu optimieren, sind in der Literatur beschrieben. Im "Technical Report" (IEEE PES-TR112) vom September 2023 werden praktische Beispiele beim Einsatz künstlicher Intelligenz zum Schutz und Regelung von Energiesystemen präsentiert. Dabei wird auf Seite 25 auch ein hybrides, intelligentes Modell zur Optimierung von Schutzeinstellungen des Distanzschutzes (R und X) vorgestellt. Dieses basiert auf dem Einsatz von Differential Evolution (DE) und einem neu entworfenen Bewertungssystem.

Aus der Veröffentlichung "Automated Protection Security Assessment of Today's and Future Power Grids" von Johann Jaeger und Rainer Krebs, IEEE 2010, geht hervor, dass die Softwareprogramme "SiGuard-PSA" und "PSS-SINCAL" der Siemens AG zur Simulation von Energienetzen und zum Überprüfen von Schutkoordinationen eingesetzt werden können.

Ausgehend von bekannten Verfahren zur Planung von Energieübertragungsnetzen stellt sich an die Erfindung die Aufgabe, ein Verfahren anzugeben, mit dem die Planung und Adaption von Schutzkonzepten sowie deren Parametrierung mit vergleichsweise geringerem Aufwand und schneller durchführbar ist.

Die Erfindung löst diese Aufgabe durch ein computerimplementiertes Verfahren nach Anspruch 1.

Die Erfindung sieht vor, eine KI-basierte Anwendung (z.B. eine generative künstliche Intelligenz) zu nutzen, um Schutzkonzepte vollautomatisiert, schnell, effizient und sicher zu erzeugen und einzustellen. Grundlagen des Systems sind dabei die bereits eingeführten Schutz-Typicals.

So lässt sich jedes Energieversorgungsnetz auf einfache, topologische Typical-Strukturen herunterbrechen. Beispiele hierfür wären Einfachleitung, Doppelleitung, Transformator, Ringleitung, etc. Dies ermöglicht die Erstellung einer speziellen Typical Datenbank, mit der eine passende KI trainiert werden kann. Die KI hat dann die Aufgabe, basierend auf dem Gelernten eingehende Netzdaten zu vervollständigen, indem sie Schutzgeräte, Schutzfunktionen oder Einstellwerte ergänzt bzw. adaptiert.

Notwendige Schutzfunktionen und Einstellwerte hängen allerdings von weit mehr Faktoren als nur der Topologie ab. So spielen zum einen die Spannungsebene, die Kurzschlussleistung oder die Betriebsmitteldaten eine große Rolle. Speziell für den Reserveschutz und eine korrekte Koordination aller Schutzgeräte ist darüber hinaus die Verschaltung und Reihenfolge aller Typicals im Netz entscheidend. Eine rein topologische Betrachtung bzw. die Betrachtung einzelner Typicals ist unzureichend.

Der Ansatz sieht daher vor, jedes einzelne, topologische Typical zu vervielfältigen, zu variieren und im Anschluss mit deutlich mehr Informationen zu füllen und abzuspeichern. So besteht jedes Typical aus Elementen und Knoten. An den Knoten sollen dabei mögliche Einspeisungen und Lasten sowie die Kenndaten der Elemente innerhalb des Typicals schematisch verändert werden. Im Anschluss kommen Lastflusssimulationen und laufende Kurzschlusssimulationen zum Einsatz, deren Ergebnisse ebenfalls abgespeichert werden. Es ergeben sich somit deutlich mehr simulierte und erweiterte Typicals, als es topologische Typicals gibt. Diese multimodalen Typicals decken dabei multivariate Zustände und Möglichkeiten ab.

Alle multimodalen Typicals werden in einem nächsten Schritt kombiniert, um eine sinnvolle, geräteübergreifende Koordination aller Schutzgeräte aller beteiligten Typicals zu erzielen.

Die Einstellungen der Schutzgeräte basieren auf erweiterten Einstellregeln, die sich das Vorhandensein der Mehrinformationen zu nutzen machen. Außerdem wird heuristischer Optimierung in Zusammenspiel mit Bewertungen im Zusammenhang mit SiGuard-PSA verwendet.

Eingestellt wird dabei immer das Schutzgerät, aus dessen Sicht die anderen Typicals folgen. Es sind daher zahlreiche Kombinationen möglich, die alle durchgespielt werden müssen. Die Gesamtheit aller Ergebnisse bilden dann die Trainingsdaten für die Kl. Der enorme Vorteil besteht darin, dass nahezu alle Eventualitäten an möglichen Topologien, Lastflüssen, Zwischeneinspeisungen, etc. im Trainingsdatensatz enthalten sind.

Bei Anwendung des Systems wird zunächst das Zielnetz analysiert und alle topologischen Typicals gefunden. Im Anschluss werden Lastflusssimulationen und Kurzschlusssimulationen ausgeführt und die Typicals mit den Ergebnisdaten ergänzt. Über ein System, welches dann die Verschaltung der verschiedenen Typicals aus Sicht jedes Schutzgerätes im Netz erkennt, kann das große Gesamtnetz runtergebrochen und abschnittsweise über die KI eingestellt bzw. adaptiert werden. Die KI fungiert dabei wie ein System, welches Daten vervollständigt und damit fehlende Puzzle-Teile ergänzt.

In der Theorie ließe sich das Konzept daher noch auf viele weitere Bereiche der Netzplanung erweitern. So könnten auch Leitungsdaten, Regler Daten, etc. ergänzt bzw. generiert werden.

Ein wesentlicher Unterschied zu bisherigen Systemen ist es, dass es bisher keine teilautomatisierten oder gar vollautomatisierten Systeme zur Schutzkonzepterstellung gibt.

Die meisten aktuellen akademischen Ansätze zur automatisierten Schutzkoordination beruhen auf heuristischen Optimierungsalgorithmen. Diese haben aber den Nachteil, dass bei jedem Durchlauf jeweils ein anderes Ergebnis ermittelt wird. Es ist daher ein besonderer Vorteil, dass das erfindungsgemäße Verfahren verlässlich stets das gleiche oder zumindest sehr ähnliche Ergebnis bei gleichen Eingangsdaten ermittelt. Das erfindungsgemäße Verfahren ist ferner hoch performant, effizient, sicher und schnell, was im Bereich des Consultings und der Netzplanung viel Zeit und damit Kosten spart. Ein weiterer Vorteil ist es, dass durch den hohen Automatisierungsgrad Kunden befähigt werden, selbstständig Schutzkonzepte zu erstellen. Außerdem ermöglicht das erfindungsgemäße Verfahren, sehr schnell auf neue Netzsituationen zu reagieren und Schutzsysteme so perspektivisch automatisiert an veränderte Gegebenheiten anzupassen.

Zusammengefasst ist festzustellen, dass die Erfindung zwar den bekannten Ansatz, Typicals einzusetzen, verwendet, diese aber anschließend automatisiert variiert werden. Dies erfolgt, indem durch Simulation die Typicals verändert und mit zusätzlichen Details angereichert werden. Einerseits wird dadurch die Anzahl der Typicals erhöht und anderseits werden die Typicals jeweils mit deutlich mehr Informationen versehen. Damit ist es möglich, verschiedenste reale und multivariate Systemzustände in den Typicals abzubilden. Damit kann eine sinnvolle, geräteübergreifende Koordination erzielt werden. Schließlich werden die so gewonnenen Typicals miteinander kombiniert, sodass ein übergreifendes Schutzkonzept ermittelt werden kann. Abschließend wird ein KI-Algorithmus eingesetzt, der die enormen Datenmengen im Zusammenhang mit allen ermittelten Typicals und Einstellwerten erlernt. Dieser ist im abschließend in der Lage, die multivariaten Typicals auf die Zielnetzstruktur zu matchen.

Anschließend ermöglicht es die Erfindung, eine Kombination oder Aneinanderreihung von Typicals vorzunehmen, um eine sinnvolle, geräteübergreifende Koordination zu erzielen.

Ein computerimplementiertes Verfahren ist im Sinne der Erfindung ein Verfahren, dessen Schritte als Software auf einem Computer ausgeführt werden können.

Ein Schutzkonzept ist im Sinne der Erfindung zum Beispiel eine Ansammlung von Einstellwerten für Schutzgeräte. Die Einstellwerte umfassen dabei zum Beispiel Auslösewerte für Schutzfunktionen, aber auch Parametrierungen für Datenkommunikationsverbindungen zu anderen Schutzgeräten, zur Leitstelle des Energienetzes, oder zu nachgeordneten Schaltgeräten.

Ein elektrisches Energieversorgungsnetz ist beispielsweise ein Energieversorgungsnetz der Hochspannungsebene mit einer Nennspannung von über 52kV. Alternativ kann es sich auch um ein elektrisches Energieversorgungsnetz der Mittelspannungsebene mit einer Nennspannung zwischen 1kV und 52kV handeln.

Eine Planungsanordnung ist im Sinne der Erfindung beispielsweise ein einzelner Computer, ein Netzwerk von Computern oder Servern (im Folgenden Einrichtungen genannt) oder eine hybride Architektur aus einer zentralen Cloud-Einrichtung und einem oder mehreren dezentralen Computern, die mit der Cloud in einer Datenkommunikation stehen. Bei der Planungsanordnung kann es sich jedoch auch um eine rein in Software implementierte Lösung handeln, die auf einer Cloud ausgeführt wird.

Eine Einrichtung im Sinne der Erfindung ist beispielsweise ein Computer mit Datenprozessor und Datenspeicher. Es kann sich bei einer Einrichtung aber auch um eine vollständig oder teilweise in Software implementierte Anwendung handeln, die auf einem Computer oder einer Cloud ausgeführt wird. Ein Eingangsdatensatz mit initialen typischen Konfigurationen von Schutzkonzepten ist beispielsweise eine Datei im JSON-Format, die die eingangs erwähnten Einstellwerte im Rahmen eines Schutzkonzepts für eines oder mehrere Schutzgeräte umfasst. Initial bedeutet in diesem Zusammenhang, dass es sich bei den initialen typischen Konfigurationen um aus einem realen, tatsächlich installierten elektrischen Energienetz, stammende Einstellwerte handelt. Diese Informationen sind der Startpunkt für das maschinelle Lernen.

Eine Schutzdatenbank ist im Sinne der Erfindung eine Datenspeichereinrichtung, die einem Computer oder einer Cloud zugeordnet ist.

Typologische Informationen mit Knoten und Elementen geben Aufschluss über die Verschaltung eines elektrischen Energieversorgungsnetzes. Knoten sind beispielsweise Verbindungspunkte zwischen elektrischen Leitungen und Elemente können Betriebsmittel des elektrischen Energieversorgungsnetzes wie etwa Schutzgeräte, Transformatoren, usw. umfassen.

Ein Vervielfältigen der typischen Konfigurationen umfasst im Sinne der Erfindung die initialen typischen Konfigurationen in einzelnen Einstellwerten abzuwandeln, um neue typische Konfigurationen zu erschaffen. Dieser Schritt ermöglicht es, gewissermaßen simulierte Trainingsdaten für das maschinelle Lernen in großer Anzahl bereitzustellen. Auf diese Weise wird es ermöglicht, ausreichend Trainingsdaten zu erschaffen, um ein Verfahren der künstlichen Intelligenz bzw. des maschinellen Lernens ausreichend trainieren zu können. Bevorzugt wird die Anzahl der typischen Konfigurationen durch das Vervielfältigen verdoppelt bis verzehnfacht, besonders bevorzugt verzehnfacht bis verhundertfacht, noch mehr bevorzugt verhundertfacht bis vertausendfacht. Einspeisungen oder Lasten sind beispielsweise an den Knoten des Energienetzes vorhandene Häuser oder Photovoltaikanlagen. Kenndaten der Elemente sind beispielsweise Einstellungen in Bezug auf eine Datenkommunikation eines Schutzgeräts oder die Leitungslänge und Beläge einer Freileitung.

In einer bevorzugten Ausführungsform des erfindungsgemäßen Verfahrens wird mittels einer Netzplanungseinrichtung ein Verfahren des maschinellen Lernens mit den initialen und vervielfältigten typischen Konfigurationen aus der Schutzdatenbank trainiert. Das Verfahren des maschinellen Lernens kann dabei beispielsweise ein sogenanntes "Large Language Model", ein statistisches Model, ein neuronales Netzwerk oder ein anderes bekanntes Verfahren des maschinellen Lernens sein. Die genaue Einrichtung und Gestaltung des Verfahrens des maschinellen Lernens kann dabei beispielsweise mittels AutoML (https://www.automl.org/automl/) ermittelt werden, indem man als Eingangsdaten einen Testdatensatz mit typischen Konfigurationen und als Vergleichsdaten/Ausgangsdaten das Energienetz, aus dem die typischen Konfigurationen ermittelt wurden, bereitstellt. Es können dann mittels AutoML unterschiedlichste Verfahren des maschinellen Lernens sowie deren Architektur sowie Hyperparamter durchprobiert werden, wobei nach Entscheidungskriterien ausgewählt werden kann, welches Verfahren im Sinne der Erfindung eingesetzt werden soll. Dabei können Entscheidungskriterien beispielsweise die Qualität des Ergebnisses, das das Verfahren des maschinellen Lernens für das reale Energienetz in Bezug auf die Schutzkonzepte ermitteln konnte, umfassen. Auch die Geschwindigkeit des maschinellen Lernens, bzw. der Ausgabe der Schutzkonzepte für das reale Energienetz kann ein Faktor sein. Ist ein geeignetes Verfahren des maschinellen Lernens anhand des Testdatensatzes bestimmt worden, so bietet es sich an, dieses Verfahren des maschinellen Lernens anschließend mit allen initialen und vervielfältigen typischen Konfigurationen aus der Schutzdatenbank zu trainieren. Auf diese Weise wird das Verfahren des maschinellen Lernens befähigt, viele unterschiedliche Schutzkonzepte aus den typischen Konfigurationen aufzubauen und für eine beliebige Anzahl realer Energienetze bereitzustellen.

In einer weiteren bevorzugten Ausführungsform des erfindungsgemäßen Verfahrens wird mittels der Netzplanungseinrichtung das trainierte Verfahren des maschinellen Lernens eingesetzt, um Konfigurationen von Schutzkonzepten für das Energieversorgungsnetz zu erstellen. Dies ist ein Vorteil, weil mit dem angelernten Verfahren des maschinellen Lernens nun beliebige reale Energienetze in Bezug auf ihre Schutzkonzepte konfiguriert werden können. Der Vorteil des Einsatzes des trainierten Verfahrens des maschinellen Lernens besteht darin, dass mittels KI-Verfahren sehr schnell auch komplexe Einstellungen (optimierte Parametrierung der Schutzgeräte) durchgeführt werden können. Auf diese Weise kann zeit- und kosteneffizient ein Schutzkonzept für ein reales Energieversorgungsnetz bereitgestellt werden.

In einer bevorzugten Ausführungsform des erfindungsgemäßen Verfahrens werden höchstens drei hintereinander geschaltete Typicals für ein Schutzkonzept eingeplant, um einen Reserveschutz und mindestens drei Zonen eines Distanzschutzes einzustellen. Dies ist ein Vorteil, weil mit diesem einfachen Ansatz aus kleinen Bausteinen schnell und unkompliziert Komplexe Schutzkonzepte geplant werden können.

In einer weiteren bevorzugten Ausführungsform des erfindungsgemäßen Verfahrens werden mittels der Netzplanungseinrichtung die erstellten Konfigurationen für Schutzkonzepte an Schutzgeräte im Energieversorgungsnetz gesendet. Dies ist ein Vorteil, weil die Schutzgeräte in dem realen Energieversorgungsnetz, das in Bezug auf seine Schutzkonzepte konfiguriert werden soll, nun die mittels künstlicher Intelligenz ermittelten Schutzkonzepte zum Einsatz gebracht werden können. Mit anderen Worten werden die erstellten Konfigurationen für Schutzkonzepte, d.h. die Parametrierungen von Einstellwerten für Schutzfunktionen sowie Datenkommunikationseinstellungen für einen Teil oder alle Schutzgeräte in einem Energieversorgungsnetz eingesetzt, um dieses vor Störungen wie z.B. Kurzschlüssen oder Blitzschlägen zu schützen.

In einer weiteren bevorzugten Ausführungsform des erfindungsgemäßen Verfahrens wird für die Lastflusssimulation und/oder Kurzschlusssimulationen ein Solver eingesetzt. Ein Solver im Sinne der Erfindung ist ein Computerprogramm, dass ein mathematisches Problem numerisch lösen kann. Dies ist ein Vorteil, weil iterativ eine eindeutige Lösung bestimmbar ist.

Ferner kann in einer alternativen Ausgestaltung der Erfindung für Schutzeinstellwerte eine heuristische Optimierung eingesetzt werden. Eine heuristische Optimierung bietet den Vorteil, dass diese auf Daten auf der Vergangenheit schnell und zuverlässig eine Lösung abschätzen kann. Sie ist dabei jedoch auch rechenintensiv und das Ergebnis ungenauer als bei das grundsätzlich bei der Erfindung eingesetzte Verfahren.

In einer weiteren bevorzugten Ausführungsform des erfindungsgemäßen Verfahrens umfasst das Schutzkonzept jeweils eine Parametrierung jedes Schutzgerätes. Dies ist ein Vorteil, weil damit jedes Schutzgerät im Energieversorgungsnetz vollständig konfiguriert ist, um gemäß der Schutzkonzepte seine Schutzfunktionen auszuführen.

In einer weiteren bevorzugten Ausführungsform des erfindungsgemäßen Verfahrens beinhalten die typischen Konfigurationen Topologieinformationen zur Verschaltung von Betriebsmitteln, und Datenkommunikationsinformationen der Betriebsmittel und Parametrierungsinformationen der Betriebsmittel, wobei unterschiedliche Betriebsmitteltypen durch eine erste Kennzeichnung unterscheidbar sind, und elektrische Verbindungen durch eine zweite Kennzeichnung unterscheidbar sind, und Datenkommunikationsverbindungen durch eine dritte Kennzeichnung unterscheidbar sind. Die typischen Konfigurationen sind damit nach Art eines Graphen mit Kanten und Knoten darstellbar, wobei an den Knoten jeweils Betriebsmittel installiert sind. Die elektrischen Verbindungen sind dabei die Kanten. Dies ist ein Vorteil, weil diese Art der Darstellung, bzw. des Datenformats, von typischen Konfigurationen eine äußerst einfache und gemeingültige Beschreibung einzelner Netzsegmente in Bezug auf ihre Betriebsmittel und Schutzkonzepte ermöglicht.

In einer weiteren bevorzugten Ausführungsform des erfindungsgemäßen Verfahrens benennen die Topologieinformationen mindestens eine der folgenden Topologien:
Einfachleitung, Doppelleitung, Transformator, Ringleitung.

In einer weiteren bevorzugten Ausführungsform des erfindungsgemäßen Verfahrens werden mittels der Veränderungseinrichtung die Kenndaten der Elemente derart geändert, dass Schutzgeräte, Schutzfunktionen oder Einstellwerte hinzugefügt oder angepasst werden. Dies ist wie eingangs erläutert ein Vorteil, weil hierdurch viele weitere Trainingsdaten für die künstliche Intelligenz erstellt werden können. Dies verbessert die Genauigkeit des Einsatzes des trainierten Verfahrens des maschinellen Lernens für eine Optimierung realer, beliebiger Energieversorgungsnetze.

In einer weiteren bevorzugten Ausführungsform des erfindungsgemäßen Verfahrens wird eine Spannungsebene des Energieversorgungsnetzes berücksichtigt. Bei der Spannungsebene kann es sich dabei beispielsweise um die Mittelspannungsebene mit einer Nennspannung zwischen 1kV und 52kV oder um die Hochspannungsebene mit einer Nennspannung über 52kV handeln.

In einer weiteren bevorzugten Ausführungsform des erfindungsgemäßen Verfahrens wird eine Kurzschlussleistung des Energieversorgungsnetzes berücksichtigt. Insbesondere betrifft dies vorhandenen oder modellierten Einspeiser. Dies ist ein Vorteil, weil damit das Ergebnis in Bezug auf die Schutzkonzepte für beliebige Energieversorgungsnetze genauer wird. In einer weiteren bevorzugten Ausführungsform des erfindungsgemäßen Verfahrens werden Betriebsmitteldaten des Energieversorgungsnetzes berücksichtigt. Dies ist ein Vorteil, weil damit die Genauigkeit weiter erhöht wird.

Es stellt sich ferner ausgehend von bekannten Verfahren zur Planung von Energieübertragungsnetzen an die Erfindung die Aufgabe, eine Planungsanordnung anzugeben, mit der die Planung mit vergleichsweise geringerem Aufwand und schneller durchführbar ist. Die Erfindung löst diese Aufgabe durch eine Planungsanordnung gemäß Anspruch 14. Eine bevorzugte Ausführungsform der Planungsanordnung ist in Anspruch 15 angegeben. Es ergeben sich für die Planungsanordnungen nach Anspruch 14 und 15 dabei jeweils sinngemäß die gleichen Vorteile wie eingangs für das erfindungsgemäße computerimplementierte Verfahren beschrieben.

Des Weiteren stellt sich an die Erfindung ausgehend von
bekannten Verfahren zur Planung von Energieversorgungsnetzen die Aufgabe, ein Computerprogramm anzugeben, mit dem die Planung mit vergleichsweise geringerem Aufwand und schneller durchführbar ist. Die Erfindung löst diese Aufgabe durch ein Computerprogramm nach Anspruch 16. Es ergeben sich dabei sinngemäß die gleichen Vorteile wie eingangs für das erfindungsgemäße computerimplementierte Verfahren erläutert.

Im Folgenden wird die Erfindung anhand von schematischen Abbildungen weiter erläutert. Dabei zeigt die
Figur 1 ein Ablaufschema für das erfindungsgemäße computerimplentierte Verfahren, und
Figur 2 einen Quellcode einer ersten Datei, die eine Gesamtübersicht, bzw. Struktur eines Dateneintrages verdeutlicht, und
Figur 3eine zweite Datei mit Informationen zu Knoten (Nodes), und
Figur 4 eine dritte Datei mit Angaben zu einer Leitung, und
Figur 5eine vierte Datei mit Angaben zu einem Schutzgerät, bzw. dessen Parametrierung.
Figur 6ein Beispielbild für ein Typical mit einer Modifizierung von Einspeisern und Lasten an den Knoten.

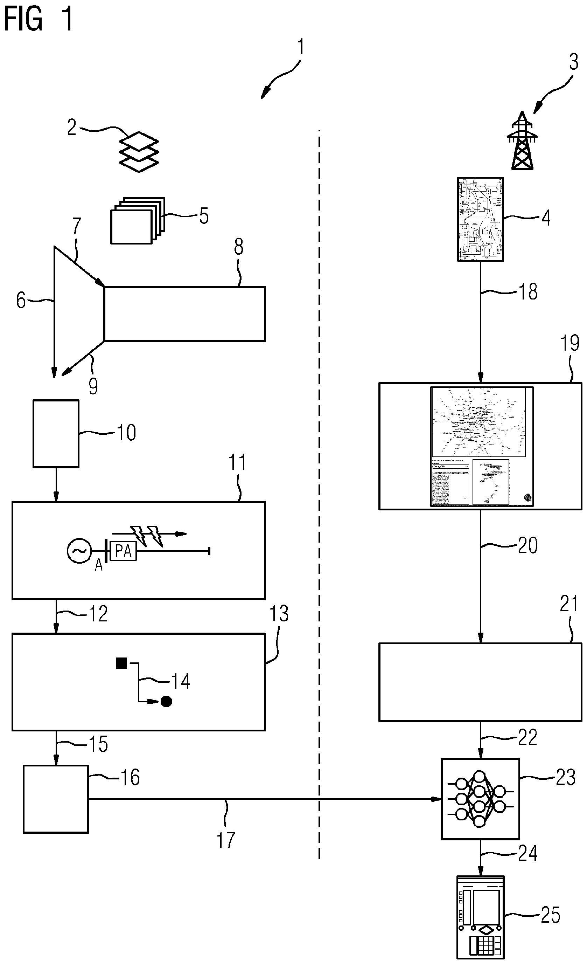

Im Ablaufschema gemäß Figur 1 sind 2 Spalten 1,3 abgebildet. In der ersten Spalte 1 wird die Trainingsvorbereitung bzw. Datenbereitstellung für das Training des Systems beschrieben. In der zweiten Spalte 3 wird auf die Anwendung des trainierten Systems für ein reales Energienetz 3 (symbolisiert durch einen Hochspannungsmasten) eingegangen. Das Training kann dabei einmalig erfolgen oder auch iterativ sein. Ein Nachtraining des Systems kann insbesondere im Rahmen eines adaptiven Schutzes im Betrieb des Energienetzes 3 eingesetzt werden.

In der linken Spalte 1 werden für das Training 2 zunächst Energienetzdaten 5 wie z.B. Element-und Knotendaten und/oder Topologieinformationen bereitgestellt. Die Energienetzdaten 5 können mit dem manuellem Schritt 6 einer einfachen topologischen Typicals-Datenbank 10 bzw. Schutzdatenbank direkt eingespeist werden (ein Typical ist eine typische Konfiguration). Dabei erfolgt eine Bearbeitung durch einen Ingenieur.

Alternativ kann über den Schritt 7 eine automatisierte Typicals-Erkennung, wie sie eingangs im Zusammenhang mit vorveröffentlichten Druckschriften erläutert wurde, und Erzeugung, die auf den Topologieinformationen basiert, durchgeführt werden. Im Schritt 9 werden die auf diese Weise ermittelten Typicals in die Typicals-Datenbank 10 eingespeist.

Aus der Typicals-Datenbank werden Typials einer Veränderungseinrichtung zugeführt, die regelbasiert Modifikationen unter Berücksichtigung der Spannungsebene an den Typicals durchführt und diese dadurch vervielfältigt. Dabei werden Lastflusssimulationen und/oder Kurzschlussstrom-Berechnungen und/oder Standards und Normen berücksichtigt. Alternativ könnte in diesem Schritt ein Verfahren der künstlichen Intelligenz wie z.B. ein large language model eingesetzt werden, um die Vervielfältigung der Typicals vorzunehmen. Beispielhaft ist ein Typical dargestellt.

Die vervielfältigten Typicals können mit Schritt 12 der einer Verbindungseinrichtung 13 hinzugefügt werden. Die Verbindungseinrichtung ist dafür ausgebildet, mehrere Typicals zu kombinieren und auf diese Weise größere "Bausteine" zu erzeugen. Piktogramm 14 deutet an, dass die Typicals kombiniert wurden. In diesem Schritt werden das Design von Schutzbereichen im Energienetz bzw. von Schutzkonzepten, Regeln für Schutzkonzepte und Optimierungen von Schutzkonzepten berücksichtigt. Dabei kann mittels der Verbindungseinrichtung ein regelbasiertes, heuristisches oder ein Verfahren der künstlichen Intelligenz eingesetzt werden. Es kann mit den Schutzkonzepten insbesondere ein Schutz für nachgelagerte Schutzgeräte geplant werden.

Schließlich werden mit Schritt 15 die Ergebnisse der Verbindungseinrichtung einer Schutzdatenbank 16 zugeführt, die für mit der eingangs erwähnten Schutzdatenbank 10 identisch sein kann. Alternativ kann eine zweite Typicals-Schutzdatenbank ausgebildet werden. Hierfür kommt eine JSON-Datenstruktur zum Einsatz, mit dem ein schutzspezifisches Datenformat bereitgestellt werden kann. Die in der Schutzdatenbank 16 enthaltenen Informationen über Typicals sind die Basis für das Training auf der rechten, zweiten Seite 3 der Abbildung. Daher muss die Datenqualität so gut wie möglich sein, d.h. es sollten keine Typicals enthalten sein, die zu fehlerhaften Schutzkonzepten führen würden. Dies kann über Checks mit entsprechenden Softwarenprogrammen wie PSA oder vergleichbaren Algorithmen überprüft werden.

Das neuronale Netz eines Verfahrens des maschinellen Lernens 23 wird mit Schritt 17 anhand der Daten aus der Schutzdatenbank 16 trainiert. Nach dem Training ist das Verfahren des maschinellen Lernens in der Lage, Schutzkonzepte zu optimieren, für die keine Typicals im realen Energieversorgungsnetz erkannt wurden.

Für den operativen Betrieb wird zunächst das zu schützende Energieversorgungssystem 4 betrachtet. Mit Schritt 18 werden mittels einer Konfigurationserkennungseinrichtung 19 typische Konfigurationen bzw. Typicals im Energieversorgungssystem erkannt. Dabei werden die Einstellungen aller installierten Schutzgeräte im Energieversorgungsnetz berücksichtigt. Für die Erkennung wird insbesondere ein Vergleich mit den in der Schutzdatenbank 16 hinterlegten Typicals durchgeführt. Dabei werden ggf. nicht alle Schutzeinstellungen erkannt, weil ggf. nicht für alle realen Einstellungen Typicals vorliegen.

Die Informationen über die erkannten Typicals werden mit Schritt 20 einer Erkennungseinrichtung 21 für eine Typicals-Sequenz bereitgestellt. Die Erkennungseinrichtung 21 ist ausgebildet, Abfolgen von erkannten Typicals aus Sicht jedes einzelnen Schutzgeräts im Energienetz festzustellen.

Mit dem Schritt 22 können diese Informationen dem bereits trainierten Verfahren des maschinellen Lernens 23 zugeführt werden, um alle bisher fehlenden Informationen für die Schutzkonzepte für das Energienetz anhand der Trainingsdaten zu ermitteln. Es wird mit Schritt 24 ein oder mehrere finale und optimierte Schutzkonzepte für das reale Energieversorgungsnetz bereitgestellt. Die Schutzkonzepte weisen eine Parametrierung für jedes Schutzgerät 25 im Energieversorgungsnetz auf.

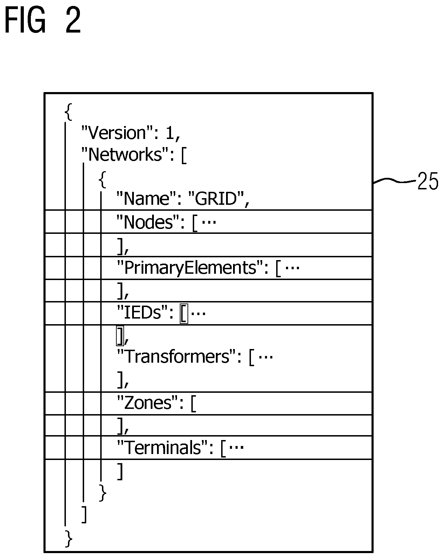

Die Figuren 2 bis 5 zeigen Dateien im JSON Format. JSON ist plattformunabhängig und geeignet für Vielzahl von Simulationstools. Die Namen der dargestellten Variablen usw. können in der Implementierung vom Fachmann ausgestaltet bzw. geändert werden.

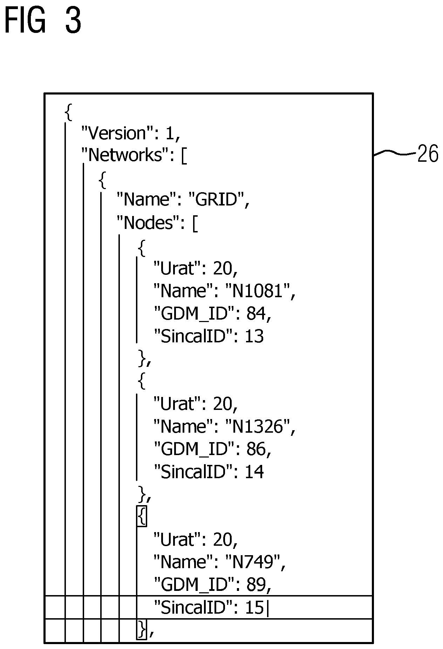

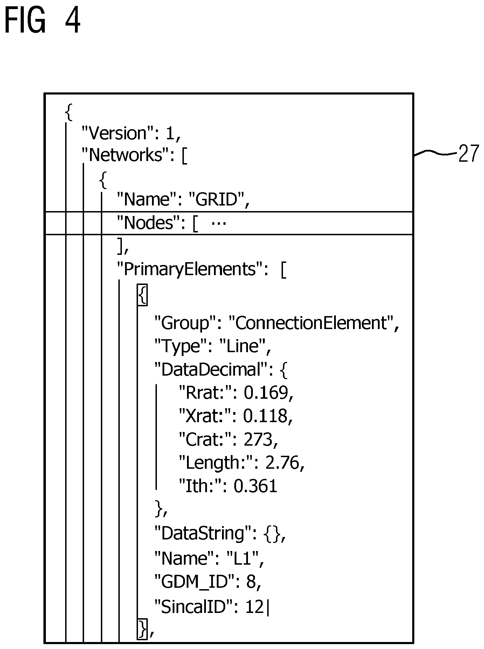

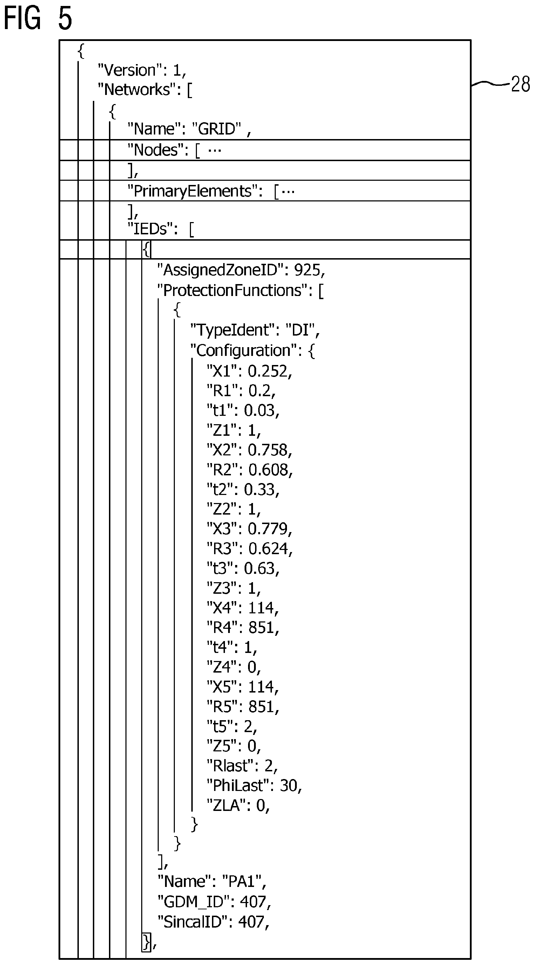

JavaScript Object Notation (JSON) als Struktur ist sehr gut von Menschen als auch Maschinen lesbar. Ein vergleichbares Format mit Energienetz- und Schutzdaten existiert bisher nicht, wenn gleich es natürlich auch kein Hexenwerk ist. Die "nID" ist eine eindeutige Zuordnungsvariable in dem verwendeten generischen Datenmodell (GDM). Dieses ist Plattform unabhängig und ermöglicht es, Netzdaten einzulesen, zu bearbeiten, Simulationen durchzuführen und auch Daten zu exportieren. Das GDM erzeugt entsprechend auch die JSON-Struktur. Darin können ganze Netze oder auch nur kleine Netzteile abgebildet werden. Die Struktur ermöglicht eine hohe Modularität. Lastfluss- und Kurzschlussdaten können in Weiterbildungen zusätzlich noch mit integriert werden. Das Prinzip bleibt aber gleich. Figur 2 zeigt eine Gesamtübersicht einer solchen Datei. Figur 3 zeigt Daten für einen Knoten und Figur 4 für Primärelemente. Figur 5 zeigt eine Dateien mit Informationen zu Schutzgeräten bzw. Intelligent Electronic Devices (IEDs).

Im Folgenden werden mit Bezug auf die Figuren einige Variablen aus den dargestellten Code-Abschnitten erläutert:
Knoten
Name: Name des Knotens
Urat: Nennspannung des Knoten
nID: Eindeutige ID des Knoten
Primärelement - Leitung
Group: Zugehörige Gruppe des Primärelements
Type: Art bzw. Typ des Primärelements
DataDouble: Liste von Eigenschaften
Rrat: Resistanz in Ohm/km
Xrat: Reaktanz in Ohm/km
Length: Länge der Leitung
Crat: Kapazitätsbelag in nF/km
Ith: Thermischer Grenzstrom in kA
Name: Name des Primärelements
nID: Eindeutige ID des Primärelementes
Sekundärelement - IED
ProtectionFunctions: Liste aller Schutzfunktionen des IED
Type: Art / Typ der Schutzfunktion
Settings: Liste aller Einstellwerte der Funktion
X1,2,3,..: Reaktanzwert 1,2,3,.. in Ohm
R1,2,3,..: Resistanzwert 1,2,3,.. in Ohm
t1,2,3,..: Verzögerungszeit 1,2,3,.. in Sekunden
Z1,2,3,..: Aktivierung/Deaktivierung der einzelnen Zonen 1,2,3..
Rlast: Lastauschnitt in Ohm
PhiLast: Winkel des Lastausschnittes in Grad
ZLA: Aktivierung/Deaktivierung des Lastausschnittes

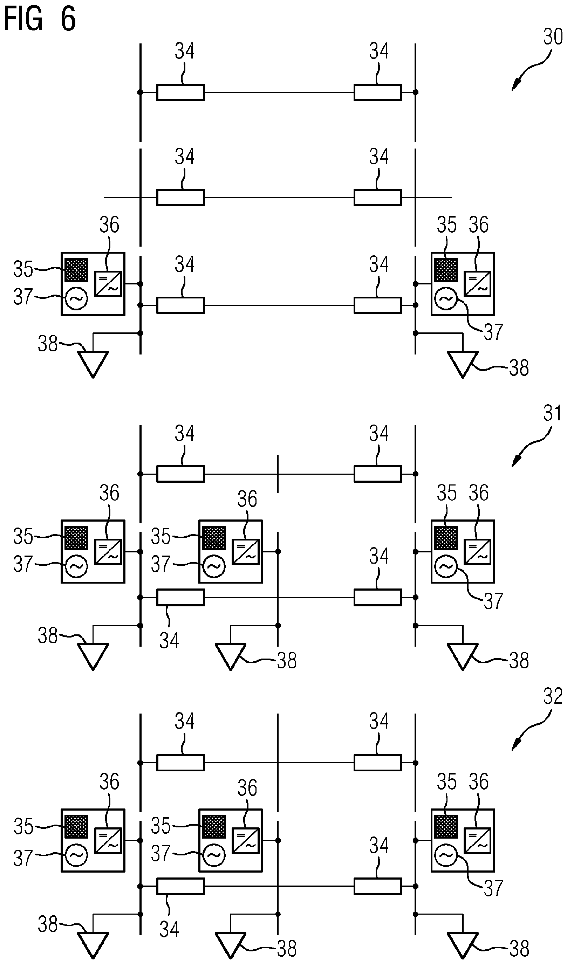

Die Figur 6 zeigt ein Beispielbild eines Typicals, das modifiziert wird durch Einspeiser und Lasten 34 an den Knoten.
Oben: einfaches Typial mit Ersatzspannungsquelle 37, Wechselrichter 36 (PV, Solarpark) und Generator 35. Das Dreieck symbolisiert: Last, Standardlast, z.B. Motor.
Mitte: mit Zwischenknoten
Unten: zwei Einfachleitungen kombiniert mit 1 oder 2 Typicals.

Das Bild zeigt Möglichkeiten, typicals zu modifizieren.

## Patentansprüche

1. Computerimplementiertes Verfahren (1,3) zur Planung eines Schutzkonzepts für ein elektrisches Energieversorgungsnetz (4) mittels einer Planungsanordnung, **gekennzeichnet durch** die Schritte:
Bereitstellen eines Eingangsdatensatzes (5) mit initialen typischen Konfigurationen von Schutzkonzepten mittels einer Schutzdatenbank(10), wobei die Schutzkonzepte jeweils topologische Informationen mit Knoten und Elementen aufweisen,
**gekennzeichnet durch** die Schritte:
Vervielfältigen der initialen typischen Konfigurationen mittels einer Veränderungseinrichtung, indem Einspeisungen elektrischer Energie und/oder Lasten an Knoten und/oder Kenndaten der Elemente verändert werden, und
Durchführen von Lastflusssimulationen und/oder Kurzschlusssimulationen für das Energieversorgungsnetz anhand der initialen und vervielfältigten typischen Konfigurationen mittels einer Simulationseinrichtung, und
Abspeichern der initialen und vervielfältigten typischen Konfigurationen mit den ihnen jeweils zugeordneten Simulationsergebnissen in der Schutzdatenbank (16).

2. Computerimplementiertes Verfahren nach Anspruch 1, **dadurch gekennzeichnet, dass** mittels einer Netzplanungseinrichtung ein Verfahren des maschinellen Lernens (23) mit den initialen und vervielfältigten typischen Konfigurationen aus der Schutzdatenbank (16) trainiert wird.

3. Computerimplementiertes Verfahren nach Anspruch 2, **dadurch gekennzeichnet, dass** mittels der Netzplanungseinrichtung das trainierte Verfahren des maschinellen Lernens (23) eingesetzt wird, um Konfigurationen von Schutzkonzepten für das Energieversorgungsnetz (4) zu erstellen.

4. Computerimplementiertes Verfahren nach Anspruch 3, **dadurch gekennzeichnet, dass** höchstens drei hintereinander geschaltete Typicals für ein Schutzkonzept eingeplant werden, um einen Reserveschutz und mindestens drei Zonen eines Distanzschutzes einzustellen.

5. Computerimplementiertes Verfahren nach Anspruch 3 oder 4, **dadurch gekennzeichnet, dass** mittels der Netzplanungseinrichtung die erstellten Konfigurationen für Schutzkonzepte an Schutzgeräte (25) im Energieversorgungsnetz gesendet werden.

6. Computerimplementiertes Verfahren nach einem der vorhergehenden Ansprüche, **dadurch gekennzeichnet, dass** die erstellten Konfigurationen jeweils eine Parametrierung jedes Schutzgerätes umfasst.

7. Computerimplementiertes Verfahren nach einem der vorhergehenden Ansprüche, **dadurch gekennzeichnet, dass** die typischen Konfigurationen Topologieinformationen zur Verschaltung von Betriebsmitteln, und Datenkommunikationsinformationen der Betriebsmittel und Parametrierungsinformationen der Betriebsmittel beinhalten, wobei unterschiedliche Betriebsmitteltypen durch eine erste Kennzeichnung unterscheidbar sind, und
elektrische Verbindungen durch eine zweite Kennzeichnung unterscheidbar sind, und Datenkommunikationsverbindungen durch eine dritte Kennzeichnung unterscheidbar sind.

8. Computerimplementiertes Verfahren nach Anspruch 7, **dadurch gekennzeichnet, dass** Topologieinformationen mindestens eine der folgenden Topologien benennen: Einfachleitung, Doppelleitung, Transformator, Ringleitung.

9. Computerimplementiertes Verfahren nach einem der vorhergehenden Ansprüche, **dadurch gekennzeichnet, dass** mittels der Veränderungseinrichtung die Kenndaten der Elemente derart geändert werden, dass Schutzgeräte, Schutzfunktionen oder Einstellwerte hinzugefügt oder angepasst werden.

10. Computerimplementiertes Verfahren nach einem der vorhergehenden Ansprüche, **dadurch gekennzeichnet, dass** ausschließlich eine Spannungsebene des Energieversorgungsnetzes berücksichtigt wird.

11. Computerimplementiertes Verfahren nach einem der vorhergehenden Ansprüche, **dadurch gekennzeichnet, dass** eine Kurzschlussleistung des Energieversorgungsnetzes berücksichtigt wird.

12. Computerimplementiertes Verfahren nach einem der vorhergehenden Ansprüche, **dadurch gekennzeichnet, dass** Betriebsmitteldaten des Energieversorgungsnetzes berücksichtigt werden.

13. Planungsanordnung zur Planung eines Schutzkonzepts für ein elektrisches Energieversorgungsnetz (4), aufweisend
eine Schutzdatenbank (10), die ausgebildet ist, einen Eingangsdatensatz (5) mit initialen typischen Konfigurationen von Schutzkonzepten bereitzustellen, wobei die Schutzkonzepte jeweils topologische Informationen mit Knoten und Elementen aufweisen,
**dadurch gekennzeichnet, dass**
eine Veränderungseinrichtung ausgebildet ist, um die initialen typischen Konfigurationen jeweils zu vervielfältigen, indem Einspeisungen elektrischer Energie und/oder Lasten an Knoten und/oder Kenndaten der Elemente verändert werden, und dass
eine Simulationseinrichtung ausgebildet ist, Lastflusssimulationen und/oder Kurzschlusssimulationen für das Energieversorgungsnetz (4) anhand der initialen und vervielfältigten typischen Konfigurationen durchzuführen, und
die initialen und vervielfältigten typischen Konfigurationen mit den ihnen jeweils zugeordneten Simulationsergebnissen in der Schutzdatenbank (16) abzuspeichern.

14. Planungsanordnung nach Anspruch 13, **dadurch gekennzeichnet, dass** eine Netzplanungseinrichtung ausgebildet ist, aus der Schutzdatenbank typische Konfigurationen auszuwählen und derart zu kombinieren, dass ein Schutzkonzept für das Energieversorgungsnetz (4) bereitgestellt wird, mit dem Schutzgeräte (25) im Energieversorgungsnetz konfigurierbar sind.

15. Computerprogramm, umfassend Befehle, die bei der Ausführung des Programms durch einen Computer diesen veranlassen, das Verfahrens gemäß einem der Ansprüche 1 bis 12 auszuführen.
